# EUROPÄISCHE PATENTSCHRIFT

(11) **EP 2 718 209 B1**
(45) Veröffentlichungstag und Bekanntmachung des Hinweises auf die Patenterteilung: **31.05.2017**
(21) Anmeldenummer: 12726435.6
(22) Anmeldetag: 06.06.2012
(51) Int. Cl.: B65G 15/36, B65G 15/40

(54) **FÖRDERGURTANLAGE SOWIE FÖRDERGURT**
CONVEYOR BELT SYSTEM AND CONVEYOR BELT
SYSTÈME DE BANDE TRANSPORTEUSE ET BANDE TRANSPORTEUSE

(30) Priorität: 08.06.2011 DE 102011050936
(43) Veröffentlichungstag der Anmeldung: 16.04.2014
(73) Patentinhaber: ThyssenKrupp Industrial Solutions AG, 45143 Essen (DE)
(72) Erfinder: RAAZ, Viktor, 44869 Bochum (DE)
(74) Vertreter: ThyssenKrupp Intellectual Property GmbH
(86) Internationale Anmeldenummer: PCT/EP2012/060765
(87) Internationale Veröffentlichungsnummer: WO 2012/168337

(56) Entgegenhaltungen:
- DE-A1- 2 831 741
- DE-A1- 19 608 371
- DE-A1- 19 811 412
- JP-U- 61 080 708
- US-A1- 2010 018 841

## Beschreibung

Die Erfindung betrifft eine Fördergurtanlage mit einem in eine Längsrichtung verlaufenden Fördergurt und einer Vielzahl von in Längsrichtung beabstandeten Tragrollenstationen, an denen der Fördergurt an Tragrollen abgestützt ist, wobei der Fördergurt aus einem flexiblen Grundmaterial und einer Vielzahl von in Längsrichtung verlaufenden, die Zugfestigkeit sowie die Zugsteifigkeit des Fördergurtes in seiner Längsrichtung bestimmenden und untereinander unverbundenen Zugmitteln gebildet ist. Die auch als Festigkeitsträger bezeichneten Zugmittel sind üblicherweise in das Grundmaterial eingebettet und bilden ein Grundgerüst, welches auch als Karkasse bezeichnet wird. Als Soll-Lage wird im Rahmen der Erfindung im Querschnitt die zentrische Ausrichtung des Fördergurtes auf den Tragrollenstationen bezeichnet. Gegenstand der Erfindung ist des Weiteren auch ein Fördergurt. Als Zugmittel können beispielsweise Stahldrähte oder Stahlseile vorgesehen sein, welche zusammen die Karkasse bilden. Die in das flexible Grundmaterial eingebettete Karkasse weist keine Verbindungen oder Verstärkungen in Querrichtung auf, so dass die Zugmittel im Sinne der Erfindung untereinander unverbunden sind. Bei dem Fördergurt werden die Zugmittel durch das flexible Grundmaterial in ihrer Position gehalten, wobei durch die Karkasse mit lediglich in Längsrichtung verlaufenden Zugmitteln eine gute Beweglichkeit des Fördergurtes in Querrichtung erreicht werden kann. Darüber hinaus ist die Herstellung des Fördergurtes einfach, weil lediglich einzelne, in Längsrichtung verlaufende Zugmittel in das Grundmaterial eingebettet werden müssen. Entsprechend hat sich gerade bei großen Fördergurtanlagen der Einsatz entsprechender Fördergurte durchgesetzt.

Während die Zugfestigkeit die Spannung bei der im Zugversuch maximal erreichten Zugkraft angibt, ist die Zugsteifigkeit ein Maß für die elastische Dehnung bei einer Veränderung der Zugkraft. Bezogen auf ein Spannungs-Dehnungs-Diagramm entspricht die Zugsteifigkeit dem funktionellen Zusammenhang zwischen Spannung und Dehnung, während die Zugfestigkeit lediglich einen Maximalwert darstellt. Bei einem linearen Verlauf entspricht die Zugsteifigkeit dem Elastizitätsmodul. Die elastische Dehnungsenergie entspricht dem Integral der Zugsteifigkeit über die jeweilige Dehnung. Bei der Auswahl von Zugmitteln von Fördergurten müssen sowohl die Zugfestigkeit als auch die Zugsteifigkeit berücksichtigt werden. Bei Gurtherstellern ist eine gurtbreitenbezogene Festigkeit als Kennzahl etabliert. Die Gurtsteifigkeit wird dabei durch die prozentuale Dehnung bei 10 % oder 20 % des Festigkeitswertes angegeben und lässt sich, genau wie die Festigkeit, zu einem gurtbreitenbezogenen, das heißt auf die Breite normierten, Kennwert umrechnen.

Fördergurtanlagen kommen für den Transport verschiedenster Schüttgüter, wie Abraum, Erze, Brennstoffe, Baustoffe oder dergleichen zum Einsatz. Hierbei liegen die Fördergurte oft in Form einer Mulde auf senkrecht zur Förderrichtung stehenden Tragrollen auf oder laufen zu einem Schlauch geformt durch Tragrollenstationen mit mehreren ringförmig angeordneten Tragrollen.

Gemäß dem allgemeinen Aufbau weist der Fördergurt ein Grundmaterial sowie eine Karkasse mit Zugmitteln auf, welche die Zugkraft übertragen und üblicherweise als Textil- oder Stahlseileinlagen ausgebildet sind. Üblicherweise sind diese Zugmittel im Querschnitt des Fördergurtes gesehen gleichmäßig über die Fördergurtbreite verteilt.

Des Weiteren sind aber auch Fördergurte bekannt, bei denen im Querschnitt über die Breite gesehen durch eine Veränderung der Dichte an Zugmitteln und/ oder eine Veränderung der Ausgestaltung der einzelnen Zugmittel Gurtabschnitte mit unterschiedlicher gurtbreitenbezogener Zugsteifigkeit vorliegen.

Aus der US 3 368 664 ist ein Fördergurt mit einer Karkasse bekannt, welche eine Struktur nach Art eines Gewebes oder Geflechtes aufweist. Die Karkasse weist in Längsrichtung verlaufende Zugträger auf, die durch in Querrichtung verlaufende Drähte miteinander verbunden und verspannt sind. Um ein Brechen in den Bereichen zwischen den Tragrollen zu vermeiden, ist dort eine erhöhte Dichte der Zugmittel vorgesehen. Um die beschriebenen Eigenschaften zu erreichen, ist aber die Verbindung in Querrichtung zwingend erforderlich, wodurch in den höher belasteten Bereichen ein sehr enges Geflecht gebildet wird. Durch die verstärkte Querverbindung wird der Fördergurt dort aber vergleichsweise steif. Insbesondere ist die Herstellung eines solchen Fördergurtes äußerst aufwendig, so dass sich das beschriebene Prinzip in der Praxis nicht durchsetzen konnte. Darüber hinaus ergibt sich zu einer Karkasse mit untereinander unverbundenen Zugmitteln auch eine völlig andere Kraftverteilung, weil die gemäß der US 3 368 664 beschriebenen Querverbindungen auch die Längszugkräfte zwischen benachbarten Zugmitteln verteilen können. Aus der US 3 368 664 ist damit eine selbsttragende Karkasse bekannt, die auch ohne das elastische Material des Fördergurtes in Querrichtung tragfähig ist.

So sind aus der EP 0 059 947 A1 sowie der EP 0 025 442 B1 Förderbänder bekannt, die lediglich an einem mittleren Gurtabschnitt untereinander unverbundene Zugmittel in Form von Stahlseilen aufweisen. Die daran anschließenden seitlichen Gurtabschnitte sind nicht verstärkt, wodurch diese an Tragrollenstationen mit einer mittleren Tragrolle und zwei daran seitlich anschließenden schräg angeordneten Tragrollen an ihren Rändern leichter abgewinkelt werden können.

Aus der DE 28 31 741 A1 ist ein gegenläufiger Ansatz bekannt, bei dem an den Rändern des Fördergurtes die Dichte an Zugmitteln erhöht, das heißt der Abstand zwischen den einzelnen Zugmitteln reduziert ist. Dadurch soll erreicht werden, dass der mittlere Gurtabschnitt zwischen den Gurtrollenstationen leichter in eine nach unten hängende und das Transportgut aufnehmende U-Form gebracht werden kann.

Schließlich ist es aus der US 2010/0018841 A1 bekannt, bei einem zu einem Schlauch geformten Fördergurt in einem Abstand zu den seitlichen Rändern Zugmittel wegzulassen, um dort ein leichteres Abklappen der einander überlappenden Ränder des Fördergurtes zu ermöglichen. Dieses Dokument offenbart eine Fördergurtanlage nach dem Oberbegriff des Anspruchs 1. Sowohl bei einer muldenförmigen Anordnung des Fördergurtes als auch einer schlauchförmigen Anordnung ist es wichtig, dass der Fördergurt sowohl im leeren als auch im beladenen Zustand nicht zu weit aus der Soll-Lage, das heißt mit der Gurtmitte von der Mitte der unteren Tragrolle, seitlich abgelenkt wird. Eine zu weite seitliche Auslenkung des Fördergurtes kann sowohl zu einer Beschädigung des Fördergurtes als auch zu einer Materialausschüttung führen.

Um eine zu große Auslenkung des Fördergurtes zu vermeiden, sind aus der Praxis verschiedene Maßnahmen bekannt. So ist es bei einer muldenförmigen Anordnung des Fördergurtes bekannt, seitliche Anschläge vorzusehen. Abgesehen davon, dass der konstruktive Aufwand durch die Anordnung von Anschlägen erhöht wird, können diese auch den Fördergurt beschädigen oder zumindest zu einem erhöhten Verschleiß führen. Des Weiteren ist es bekannt, ausgehend von der Gurtmitte die Tragrollen oder ein Teil der Tragrollen leicht schräg anzuordnen, so dass diese in der Draufsicht in einer leichten Pfeil-Form in Bewegungsrichtung weisen. Durch eine solche Verkippung der Drehachse gegenüber der Querrichtung des Gurtes kann zwar eine gewisse Zentrierung erreicht werden, jedoch tritt gleichzeitig eine deutliche Erhöhung der Reibung auf, wodurch sowohl der Verschleiß als auch die zum Vortrieb des Fördergurtes notwendige Antriebsenergie erheblich erhöht werden.

Vor diesem Hintergrund liegt der Erfindung die Aufgabe zugrunde, eine Fördergurtanlage anzugeben, die mit einfachen Mitteln eine zuverlässige Zentrierung des Fördergurtes ermöglicht.

Ausgehend von einer Fördergurtanlage mit den eingangs beschriebenen Merkmalen wird die Aufgabe erfindungsgemäß dadurch gelöst, dass im Querschnitt des Fördergurtes und bezogen auf eine Soll-Lage an einem mittleren, an jeweils einer Tragrolle der Tragrollenstation abgestützten Gurtabschnitt die gurtbreitenbezogene Zugsteifigkeit geringer ist als an seitlich anschließenden Gurtabschnitten, die in der Soll-Lage nicht an einer Tragrolle abgestützt sind. Durch die beschriebene Ausgestaltung wird bezogen auf die seitliche Ausrichtung des Fördergurtes in den Tragrollenstationen eine Selbstzentrierung erreicht, die sowohl auf geraden Strecken als auch bei Kurvendurchgängen wirksam ist. Erfindungsgemäß werden bei seitlichen Gurtauslenkungen ausgehend von der Soll-Lage durch die Veränderung der Zugsteifigkeit in Querrichtung selbstzentrierende Kräfte im Fördergurt selbst erzeugt, die der Auslenkung entgegenwirken.

Der Erfindung liegt in diesem Zusammenhang die Erkenntnis zugrunde, dass sich die im Querschnitt betrachtete Form des Fördergurtes deutlich verändert, wenn der Fördergurt einerseits an den Tragrollenstationen abgestützt ist und andererseits freihängend zwischen den Tragrollenstationen verläuft. Während der Fördergurt in den nicht abgestützten Bereichen eine gleichmäßige Krümmung, das heißt je nach Ausgestaltung eine U-Form oder bei einem geschlossenen Schlauch eine ovale Form aufweist, liegt der Fördergurt an den Tragrollenstationen zumindest abschnittsweise gerade an den einzelnen Tragrollen an. An diesen an den Tragrollen abgestützten Abschnitten erfolgt also entlang der aufeinander folgenden Tragrollenstationen eine erhebliche Umformung, während die zwischen den einzelnen Tragrollen angeordneten Abschnitte des Fördergurtes in ihrer Krümmung und Ausrichtung einer deutlich geringeren Änderung unterworfen sind.

Im Rahmen der Erfindung werden diese in der zentrischen Ausrichtung des Fördergurtes, also der Soll-Lage, nicht abgestützten Gurtabschnitte mit einer erhöhten gurtbreitenbezogenen Zugsteifigkeit versehen, wogegen zumindest ein mittlerer Abschnitt und vorzugsweise auch weitere an den Tragrollen in der Soll-Lage abgestützten Gurtabschnitte aufgrund einer geringen gurtbreitenbezogenen Zugsteifigkeit leichter verformt und gedehnt werden können. Die Soll-Lage stellt bezogen auf die elastische Verformenergie der Zugmittel ein Minimum dar, so dass der Fördergurt allein aufgrund seiner an die Ausgestaltung der Tragrollenstation angepassten Struktur stets in die Soll-Lage gedrängt wird.

Dieser der Erfindung zugrunde liegende Effekt tritt besonders klar zutage, wenn die Tragrollenstationen jeweils zumindest drei Tragrollen mit einer mittleren Tragrolle unterhalb des Fördergurtes und zwei dazu seitlich angeordneten Tragrollen aufweisen. Bei der Betrachtung einer solchen Fördergurtanlage von der Seite ist erkennbar, dass der von dem mittleren Gurtabschnitt gebildete untere Rand des Fördergurtes zwischen den Abstützungspunkten an den Tragrollenstationen deutlich durchhängt, so dass dort die entsprechenden Zugmittel einer größeren Dehnung unterworfen sind. Durch die Reduzierung der gurtbreitenbezogenen Zugsteifigkeit gerade in den stark belasteten und an den Tragrollen abgestützten Bereichen kann der Fördergurt leichter umgeformt werden. Eine ausreichende Stabilität des gesamten Fördergurtes wird dabei durch die hohe gurtbreitenbezogene Zugsteifigkeit an den nicht abgestützten Bereichen, die einer deutlich geringeren Umformung unterworfen sind, gewährleistet.

Die im Querschnitt gesehene unterschiedliche gurtbreitenbezogene Zugsteifigkeit in Längsrichtung an den verschiedenen Gurtabschnitten kann durch eine Änderung der Dichte an Zugmitteln und/oder durch eine Veränderung der Zugmittel selbst erfolgen. So kann beispielsweise die Querschnittsfläche der einzelnen Zugmittel variiert werden. Eine besonders einfache Ausgestaltung ergibt sich in diesem Zusammenhang jedoch, wenn sämtliche Zugmittel gleich ausgebildet sind, wobei zur lokalen Veränderung der gurtbreitenbezogenen Zugsteifigkeit die Dichte an Zugmitteln, das heißt der Abstand zwischen den einzelnen Zugmitteln, verändert wird. Bei der Herstellung des Fördergurtes müssen dann nicht unterschiedliche Zugmittel bereitgestellt werden. Als Zugmittel sind insbesondere Stahldrähte oder aus mehreren Drähte gebildete Stahlseile geeignet. Je nach Anwendungsfall sind aber auch andere Zugmittel denkbar, die beispielsweise aus natürlichen und/oder synthetischen Materialien gebildet sein können. Die einzelnen Abschnitte mit unterschiedlicher gurtbreitenbezogener Zugsteifigkeit weisen üblicherweise jeweils mehrere Zugmittel auf. Als Grundmaterial des Fördergurtes kommt ein Elastomer, insbesondere Gummi oder ein gummiähnlicher Kunststoff, in Betracht.

Die erfindungsgemäße Ausgestaltung der Fördergurtanlage kann sowohl bei einer muldenförmigen Anordnung des Fördergurtes oder auch bei einem zum Schlauch geschlossenen Fördergurt genutzt werden. Bei einem zu einem Schlauch geschlossenen Fördergurt ist an den Tragrollenstationen üblicherweise eine ringförmige Anordnung der Tragrollen vorgesehen.

In üblicher Weise kann der Fördergurt auch in einem Bogen, das heißt bezogen auf die Anordnung der aufeinander folgenden Tragrollenstationen entlang eines Polygonzuges geführt werden. Auch bei einem solchen nicht geraden Verlauf wird im Rahmen der Erfindung die Selbstzentrierung bezüglich der Soll-Lage erreicht. Bei einem nicht geraden Verlauf des Fördergurtes bezieht sich der Begriff der Längsrichtung auf die Förderrichtung entlang der beschriebenen Kurve bzw. entlang des beschriebenen Polygonzuges.

Um bei einem zu einem Schlauch geschlossenen Fördergurt die Laufeigenschaften noch weiter zu verbessern, kann eine bilanzierte Zugträgerverteilung vorgesehen sein. Damit ist gemeint, dass die Zugmittel derart in dem Fördergurt angeordnet sind, dass der Schwerpunkt aller Zugmittel zusammen in etwa im Schwerpunkt der von den Tragrollen einer Tragrollenstation begrenzten Querschnittsfläche liegt. Bei einer bevorzugten symmetrischen Anordnung der Tragrollen der Tragrollenstation liegt der Schwerpunkt der von den Tragrollen begrenzten Querschnittsfläche genau in der Mitte der Tragrollenstation, also in dem Schnittpunkt der vertikalen sowie horizontalen Symmetrieachsen. Bei einer bilanzierten Zugträgerverteilung werden bei einem horizontalen und/oder vertikalen Kurvendurchlauf des Fördergurtes sowohl die Zugkraft- und schwerkraftbedingten Komponenten eines destabilisierenden Drehmomentes weitgehend eliminiert und die erfindungsgemäß vorliegenden selbstzentrierenden Eigenschaften nicht beeinträchtigt.

Durch die erfindungsgemäße Ausgestaltung ergeben sich neben den selbstzentrierenden Eigenschaften auch noch weitere Vorteile. So ergibt sich aufgrund der optimierten Kräfteverteilung auch eine Verringerung der zum Vortrieb notwendigen Antriebsenergie. Entsprechend werden auch die Belastung und der Verschleiß des Fördergurtes reduziert. Neben einer Erhöhung der Standzeit der Fördergurtanlage kann im Rahmen der Erfindung damit auch in Betracht gezogen werden, den Abstand zwischen den einzelnen Tragrollenstationen zu erhöhen, wodurch sich ein erhebliches Einsparungspotential ergibt.

Die konkrete Ausgestaltung der Tragrollenstation ist im Rahmen der Erfindung nicht eingeschränkt. So können beispielsweise die Tragrollen einer Tragrollenstation auch einen gewissen Versatz in Längsrichtung aufweisen. Insbesondere bei einer ringförmigen Anordnung von Tragrollen bei einem zum Schlauch geschlossenen Fördergurt ist ein solcher Versatz in Längsrichtung üblich, wobei die Tragrollen einer Tragrollenstation üblicherweise in voneinander beabstandeten Gruppen angeordnet sind. Gegenstand der Erfindung ist auch ein Fördergurt gemäß den Ansprüchen 7 bis 10, der für die beschriebene Fördergurtanlage geeignet ist.

Der Erfindung wird im Folgenden anhand einer lediglich ein Ausführungsbeispiel darstellenden Zeichnung erläutert. Es zeigen:
- **Fig. 1**: einen Ausschnitt einer Fördergurtanlage mit einem Fördergurt und Tragrollenstationen in einer Seitenansicht,
- **Fig. 2a**: einen Querschnitt durch die in Fig. 1 dargestellte Fördergurtanlage im Bereich einer der Tragrollenstationen, wobei der Fördergurt sich in einer Soll-Lage befindet,
- **Fig. 2b**: die Anordnung gemäß der Fig. 2a mit einem seitlich aus der Soll-Lage verschobenen Fördergurt,
- **Fig. 3**: einen Vergleich der Lage des Fördergurtes im Bereich einer der Tragrollenstation einerseits und in einem Bereich zwischen zwei aufeinander folgenden Tragrollenstationen andererseits,
- **Fig. 4a**: eine Fördergurtanlage mit einem zu einem Schlauch geschlossenen Fördergurt in einer Darstellung gemäß der Fig. 2a,
- **Fig. 4b**: die Anordnung gemäß der Fig. 4a mit dem gegenüber der Soll-Lage seitlich ausgelenkten Fördergurt,
- **Fig. 5a**: eine alternative Ausgestaltung der Erfindung mit einem zu einem Schlauch geschlossenen Fördergurt in einer Darstellung gemäß der Fig. 4a,
- **Fig. 5b**: die Anordnung gemäß der Fig. 5a mit dem gegenüber der Soll-Lage verschobenen Fördergurt, und
- **Fig. 6**: die Draufsicht auf eine Teillänge der Fördergurtanlage, wobei aufeinander folgende Tragrollenstationen entlang eines Polygonzuges angeordnet sind.

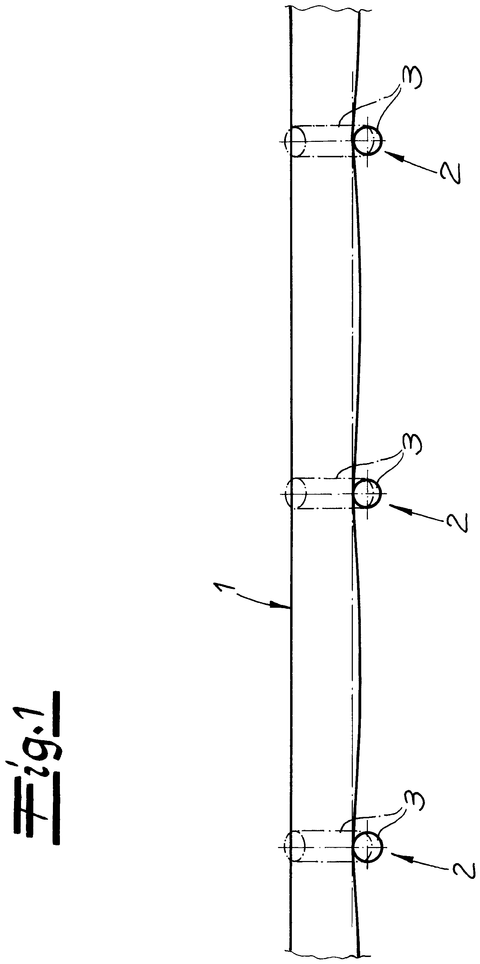

Die Fig. 1 zeigt in einer Seitenansicht einen muldenförmigen Ausschnitt einer Fördergurtanlage mit einem in eine Längsrichtung verlaufenden Fördergurt 1 und einer Vielzahl von in Längsrichtung beabstandeten Tragrollenstationen 2, an denen der Fördergurt 1 an Tragrollen 3 abgestützt ist. Dabei ist zu erkennen, dass der Fördergurt 1 zwischen den Tragrollenstationen 2 mit seinem unteren Rand gegenüber der Horizontalen durchhängt. Der Fördergurt 1 kann als endlos umlaufendes Band ausgebildet sein, wobei dann der hin- und zurücklaufende Fördergurt 1 in zwei Ebenen übereinander in entgegengesetzter Richtung geführt ist. Aus Gründen der Übersichtlichkeit ist aber nur der Obertrum mit den entsprechenden Tragrollen 3 dargestellt.

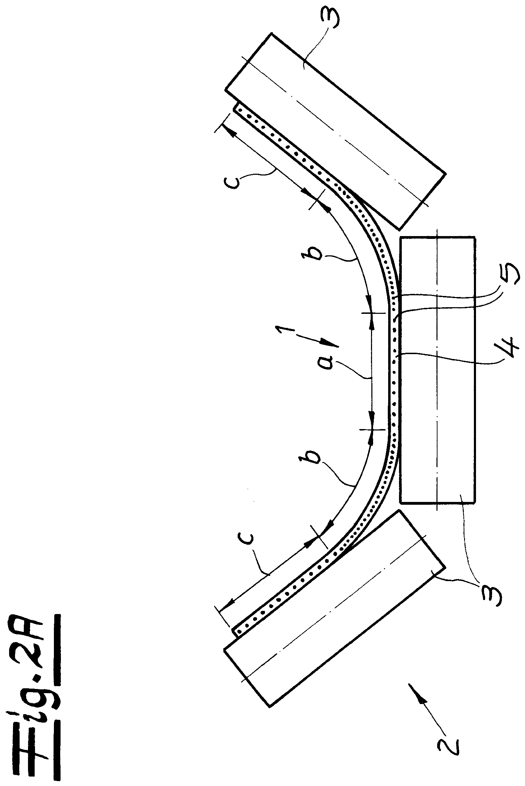

Die Fig. 2a zeigt für eine erfindungsgemäße Fördergurtanlage einen Querschnitt durch den Fördergurt 1 im Bereich einer der Tragrollenstationen 2. Zu erkennen ist, dass in dem dargestellten Ausführungsbeispiel der Fördergurt 1 aufgrund einer entsprechenden Anordnung der Tragrollen 3 eine Muldenform aufweist. Der Fördergurt 1 ist aus einem flexiblen Grundmaterial 4, beispielsweise einem Elastomer wie Gummi oder einem gummiähnlichen Kunststoff, sowie aus Zugmitteln 5 gebildet, die in Längsrichtung verlaufen und die Zugfestigkeit und Zugsteifigkeit des Fördergurtes 1 in Längsrichtung bestimmen. Die in das Grundmaterial 4 eingebetteten Zugmittel 5 bilden zusammen eine Karkasse ohne Querverbindungen. Die Beweglichkeit des Fördergurtes 1 in Querrichtung wird damit im Wesentlichen durch das flexible Grundmaterial 4 bestimmt.

Die Fig. 2a zeigt auch, dass die Zugmittel 5 in Form von Stahlseilen entlang des Querschnittes mit einer unterschiedlich dichten Anordnung, das heißt mit einem unterschiedlichen Abstand zueinander vorgesehen sind.

Erfindungsgemäß ist im Querschnitt des Fördergurtes 1 und bezogen auf die in Fig. 2a dargestellte zentrische Soll-Lage des Fördergurtes 1 an einem mittleren, an der mittleren Tragrolle 3 abgestützten Gurtabschnitt a die gurtbreitenbezogene Zugsteifigkeit geringer als an den seitlich anschließenden Gurtabschnitten b, an denen der Fördergurt 1 in der Soll-Lage nicht an einer der Tragrollen 3 abgestützt ist. Dies wird dadurch erreicht, dass die Zugmittel in den nicht abgestützten Gurtabschnitten b enger angeordnet sind. In Richtung des äußeren Randes des Fördergurtes schließen die an den seitlichen Tragrollen 3 abgestützten äußeren Gurtabschnitt c an, die wiederum durch einen entsprechend vergrößerten Abstand der einzelnen Zugmittel 5 eine reduzierte gurtbreitenbezogene Zugsteifigkeit aufweisen.

Bereits einer vergleichenden Betrachtung der Fig. 1 und Fig. 2a ist zu entnehmen, dass der Fördergurt 1 in den an den Tragrollen 3 abgestützten Bereichen einer größeren Verformung unterworfen ist, wobei die Zugmittel der entsprechenden Gurtabschnitte zwischen den einzelnen Tragrollenstationen 2 auch einer größeren Dehnung unterworfen sind.

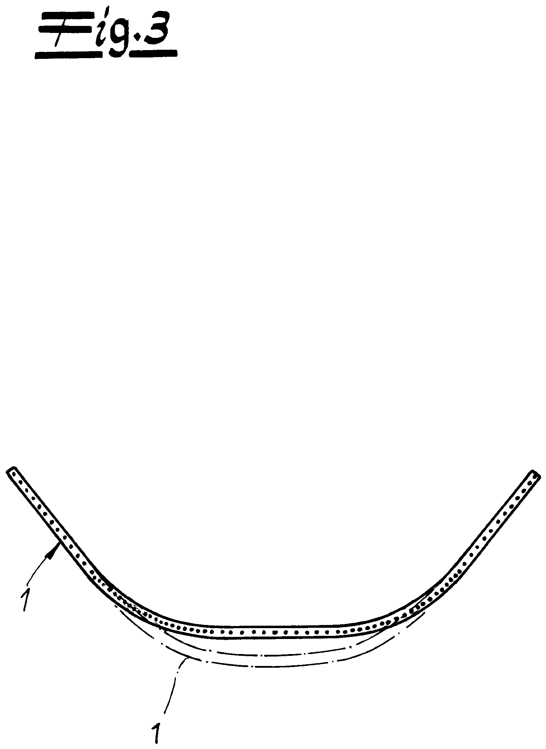

Zur weiteren Verdeutlichung ist in der Fig. 3 der Verlauf des Fördergurtes 1 im Querschnitt einerseits im Bereich einer der Tragrollenstationen 2 (durchgezogene Linie) sowie zwischen zwei Tragerollenstationen 2 (strichpunktiert) dargestellt. Während der Fördergurt 1 in dem zwischen zwei Tragrollenstationen 2 freihängenden Bereich eine gleichmäßige Krümmung mit einer U-Form annimmt, ergibt sich im Bereich der Tragrollenstation 2 durch die Tragrollen 3 eine Verformung, bei der der Fördergurt 1 zumindest abschnittsweise an den einzelnen Tragrollen 3 eben anliegt.

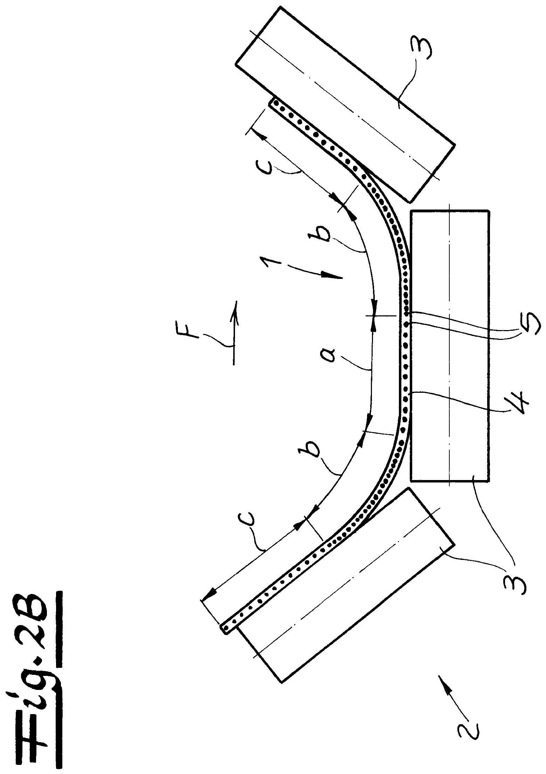

Der Fig. 3 ist in diesem Zusammenhang zu entnehmen, dass bezogen auf die zentrische Soll-Lage die nicht abgestützten Gurtabschnitte b weniger verformt werden und damit auch einer geringeren Zugdehnung unterworfen sind. Da erfindungsgemäß gerade diese Bereiche eine erhöhte gurtbreitenbezogene Zugsteifigkeit aufweisen, stellt die Soll-Lage bezogen auf die Kräfte- und Energiebilanz ein Optimum dar, so dass der Fördergurt 1 bei einer seitlichen Auslenkung durch einen Selbstzentrierungseffekt zurück in die Soll-Lage gedrängt wird. Eine entsprechende Auslenkung des Fördergurtes 1 ist in der Fig. 2b dargestellt, wobei die wirkenden Rückstellkräfte F mit einem Pfeil angedeutet sind.

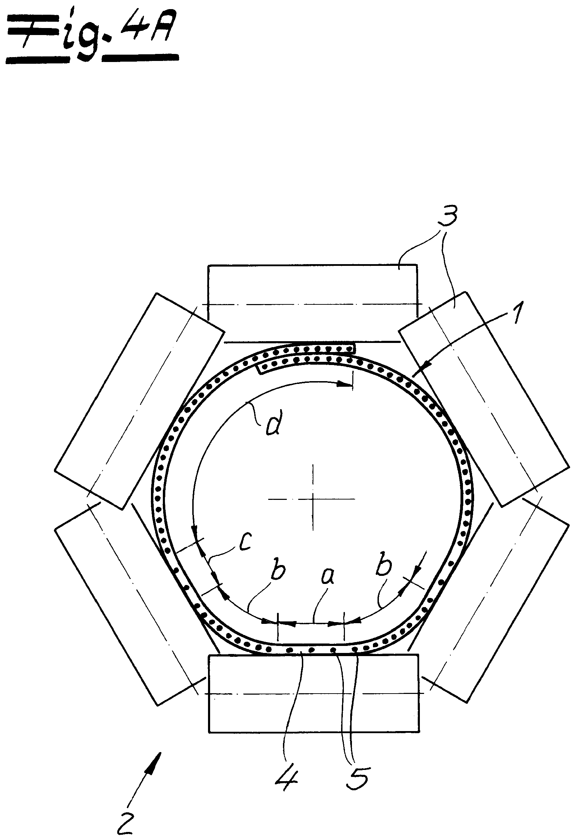

Im Rahmen der Erfindung kann gemäß der Fig. 4a der Fördergurt 1 auch durch eine ringförmige Anordnung der Tragrollen 3 an den Tragrollenstationen 2 zu einem Schlauch geformt sein, wobei dann in dem unteren, die Zug- und Gewichtskräfte aufnehmenden Bereich des zu einem Schlauch geformten Fördergurtes 1 die beschriebene Veränderung der gurtbreitenbezogenen Zugsteifigkeit erfolgt, wobei ausgehend von dem mittleren Gurtabschnitt a in beide Richtungen ein erster nicht abgestützter Gurtabschnitt b mit einer erhöhten gurtbreitenbezogenen Zugsteifigkeit und ein wiederum von einer der seitlichen Tragrollen 3 abgestützter Gurtabschnitt c mit einer reduzierten, gurtbreitenbezogenen Zugsteifigkeit anschließen. Die Endabschnitte d weisen dagegen eine gleichmäßige Verteilung an Zugmitteln 5 auf, weil dort der Fördergurt nur vergleichsweise geringen Belastungsänderungen ausgesetzt ist.

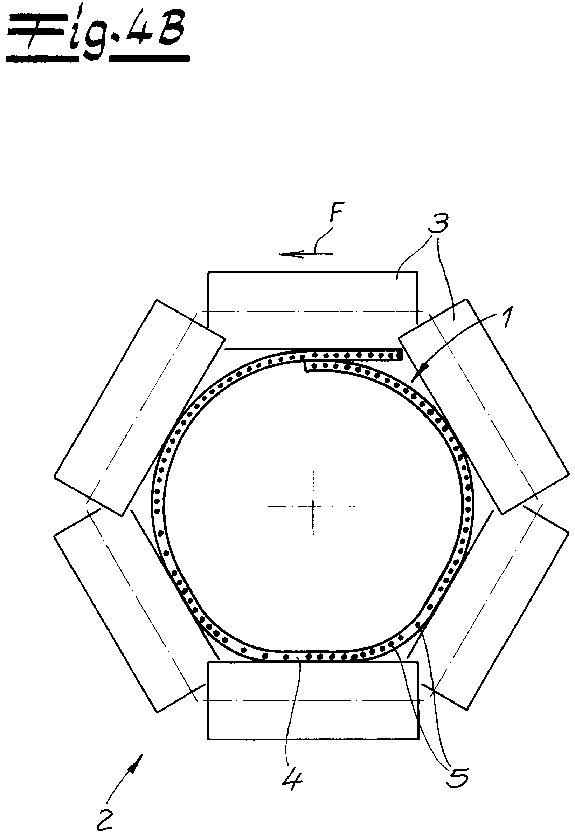

Die Fig. 4b zeigt, dass auch bei einer solchen Ausgestaltung der Fördergurt 1 bei einer Auslenkung aus der zentrischen Soll-Lage durch entsprechende Rückstellkräfte F zurückgedrängt wird.

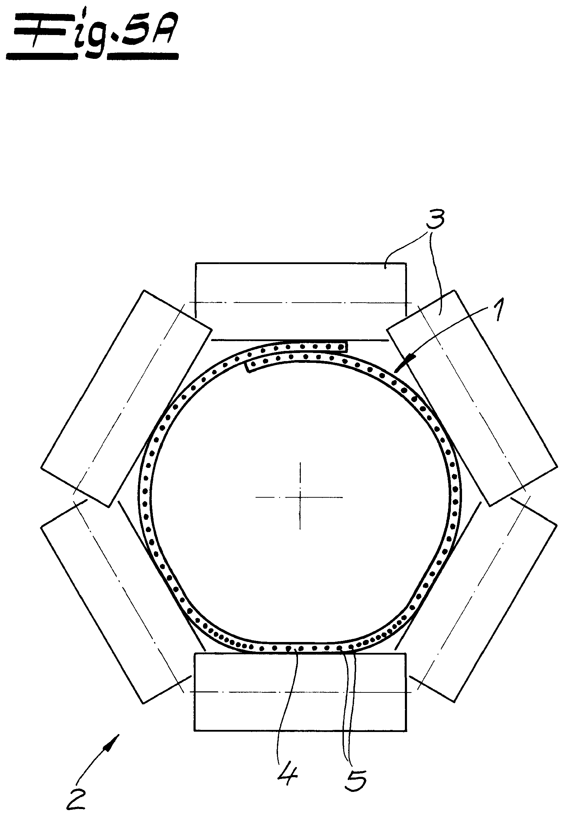

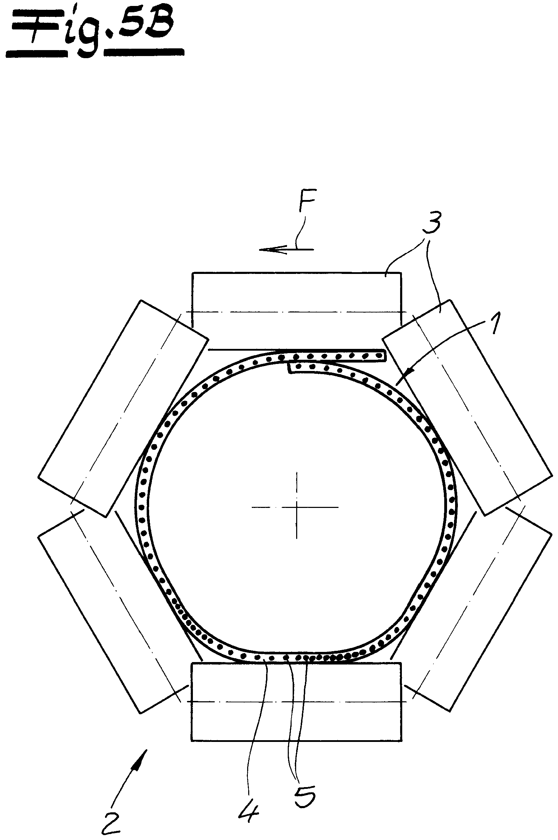

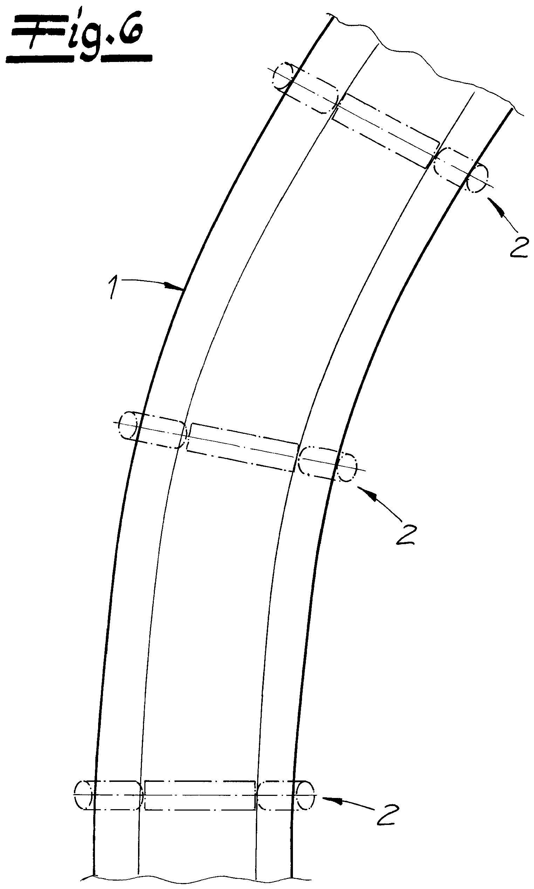

Die Fig. 5a und 5b zeigen entsprechend den Fig. 4a und 4b eine Variante der erfindungsgemäßen Fördergurtanlage, bei der der zu einem Schlauch geformte Fördergurt 1 eine veränderte Verteilung an Zugmitteln 5 aufweist, wobei der Schwerpunkt aller Zugmittel 5 zusammen in etwa im Schwerpunkt der von den Tragrollen 3 einer Tragrollenstation 2 begrenzten Querschnittsfläche liegt. Durch eine solche Anordnung, die auch als bilanzierte Zugträgerverteilung bezeichnet wird, können destabilisierende Drehmomente vermieden werden, wenn der Fördergurt 1 in einem Bogen bzw. bezogen auf die einzelnen Tragrollenstationen 2 entlang eines Polygonzuges geführt wird. Ein solcher Bogen ist exemplarisch in der Fig. 6 dargestellt.

## Patentansprüche

1. Fördergurtanlage mit einem in eine Längsrichtung verlaufenden Fördergurt (1) und einer Vielzahl von in Längsrichtung beabstandeten Tragrollenstationen (2), an denen der Fördergurt (1) an Tragrollen (3) abgestützt ist, wobei der Fördergurt (1) aus einem flexiblen Grundmaterial (4) und einer Vielzahl von in Längsrichtung verlaufenden und die Zugsteifigkeit des Fördergurtes (1) bestimmenden und untereinander unverbundenen Zugmitteln (5) gebildet ist, **dadurch gekennzeichnet, dass** im Querschnitt des Fördergutes (1) und bezogen auf eine Soll-Lage an einem mittleren, an jeweils einer Tragrolle (3) der Tragrollenstation (2) abgestützten Gurtabschnitt (a) die gurtbreitenbezogene Zugsteifigkeit geringer als an seitlich anschließenden Gurtabschnitten (b) ist, die in der Soll-Lage nicht an einer Tragrolle (3) abgestützt sind.

2. Fördergurtanlage nach Anspruch 1, **dadurch gekennzeichnet, dass** an dem mittleren, abgestützten Gurtabschnitt (a) die gurtbreitenbezogene Dichte an Zugmitteln (5) und/oder die Querschnittsfläche der einzelnen Zugmittel (5) im Vergleich zu den seitlich anschließenden Gurtabschnitten (b) reduziert ist.

3. Fördergurtanlage nach Anspruch 1 oder 2, **dadurch gekennzeichnet, dass** die Tragrollenstationen (2) jeweils zumindest drei Tragrollen (3) mit einer mittleren Tragrolle (3) unterhalb des Fördergurtes (1) und zwei dazu seitlich angeordnete Tragrollen (3) aufweisen, wobei die in der Soll-Lage an den Tragrollen (3) abgestützten Gurtabschnitte (a, c) eine geringere gurtbreitenbezogene Zugsteifigkeit als die jeweils zwischen der mittleren Tragrolle (3) und einer der seitlich angeordneten Tragrollen (3) unabgestützten Gurtabschnitte (b) aufweisen.

4. Fördergurtanlage nach einem der Ansprüche 1 bis 3, **dadurch gekennzeichnet, dass** der Fördergurt (1) durch eine ringförmige Anordnung der Tragrollen (3) an den Tragrollenstationen (2) zu einem geschlossenen Schlauch geformt ist.

5. Fördergurtanlage nach Anspruch 4, **dadurch gekennzeichnet, dass** die Zugmittel (5) derart in dem Fördergurt (1) angeordnet sind, dass der Schwerpunkt aller Zugmittel (5) zusammen in etwa im Schwerpunkt der von Tragrollen (3) einer Tragrollenstation (2) begrenzten Querschnittsfläche liegt.

6. Fördergurtanlage nach einem der Ansprüche 1 bis 5, **dadurch gekennzeichnet, dass** zumindest entlang einer Teillänge der Anlage die aufeinander folgenden Tragrollenstationen (2) entlang eines Polygonzuges angeordnet sind.

7. Fördergurt (1) für eine Fördergurtanlage nach einem der Ansprüche 1 bis 6, aus einem flexiblen Grundmaterial (4) und aus in Längsrichtung des Fördergurtes (1) verlaufenden, die Zugsteifigkeit des Fördergurtes (1) bestimmenden und untereinander unverbundenen Zugmitteln (5), wobei im Querschnitt des Fördergurtes (1) durch eine Veränderung der gurtbreitenbezogenen Dichte an Zugmittel (5) und/ oder eine Veränderung der Ausgestaltung der einzelnen Zugmittel (5) Gurtabschnitte (a, b, c) mit unterschiedlicher gurtbreitenbezogener Zugsteifigkeit vorliegen, **dadurch gekennzeichnet, dass** ausgehend von einem mittleren Gurtabschnitt (a) in beide Richtungen zunächst ein erster Gurtabschnitt (b) und darauf folgend ein zweiter Gurtabschnitt (c) anschließen, wobei die gurtbreitenbezogene Zugsteifigkeit an dem ersten Gurtabschnitt (b) größer ist als an dem mittleren Gurtabschnitt (a) und an dem zweiten Gurtabschnitt (c).

8. Fördergurt (1) nach Anspruch 7, **dadurch gekennzeichnet, dass** das Grundmaterial (4) ein Elastomer, insbesondere oder ein gummiähnlicher Kunststoff, ist.

9. Fördergurt (1) nach Anspruch 7 oder 8, **dadurch gekennzeichnet, dass** als Zugmittel (5) Stahldrähte oder Stahlseile vorgesehen sind.

10. Fördergurt (1) nach einem der Ansprüche 7 bis 9, **dadurch gekennzeichnet, dass** sämtliche Zugmittel (5) gleich ausgebildet sind, wobei die gurtbreitenbezogene Dichte an Zugmitteln (5) in Gurtabschnitten (b) mit einer erhöhten, gurtbreitenbezogenen Zugsteifigkeit erhöht ist.

## Claims

1. Conveyor belt system having a longitudinally running conveyor belt (1) and a multiplicity of longitudinally spaced-apart carrying-roller stations (2), on which the conveyor belt (1) is supported on carrying rollers (3), wherein the conveyor belt (1) is formed from a flexible base material (4) and a multiplicity of longitudinally running tension means (5), which are not connected to one another but determine the tensile stiffness of the conveyor belt (1), **characterized in that**, as seen in cross section of the conveyor belt (1) and in relation to a desired position, the belt-width-specific tensile stiffness is smaller on a central belt portion (a), which is supported on a respective carrying roller (3) of the carrying-roller station (2), than on laterally adjoining belt portions (b), which, in the desired position, are not supported on a carrying roller (3).

2. Conveyor belt system according to Claim 1, **characterized in that**, on the central, supported belt portion (a), the belt-width-specific density of tension means (5) and/or the cross-sectional surface area of the individual tension means (5) are/is reduced in relation to the laterally adjoining belt portions (b).

3. Conveyor belt system according to Claim 1 or 2, **characterized in that** the carrying-roller stations (2) each comprise at least three carrying rollers (3), with a central carrying roller (3) beneath the conveyor belt (1) and two carrying rollers (3) arranged laterally in relation to the central one, wherein the belt portions (a, c), which, in the desired position, are supported on the carrying rollers (3), comprise a lower belt-width-specific tensile stiffness than the non-supported belt portions (b) in each case between the central carrying roller (3) and one of the laterally arranged carrying rollers (3).

4. Conveyor belt system according to one of Claims 1 to 3, **characterized in that** the conveyor belt (1) is formed into a closed tube by virtue of the carrying rollers (3) being arranged in an annular manner on the carrying-roller stations (2).

5. Conveyor belt system according to Claim 4, **characterized in that** the tension means (5) are arranged in the conveyor belt (1) such that the centre of gravity of all the tension means (5) together is located approximately in the centre of gravity of the cross-sectional surface area delimited by carrying rollers (3) of a carrying-roller station (2).

6. Conveyor belt system according to one of Claims 1 to 5, **characterized in that** the successive carrying-roller stations (2) follow a polygonal progression at least along a sub-length of the installation.

7. Conveyor belt (1) for a conveyor belt system according to one of Claims 1 to 6, made from a flexible base material (4) and from tension means (5), which are not connected to one another but determine the tensile stiffness of the conveyor belt (1), and run in the longitudinal direction of the conveyor belt (1), wherein, as seen in cross section of the conveyor belt (1), belt portions (a, b, c) having different levels of belt-width-specific tensile stiffness are achieved by a modification in the belt-width-specific density of tension means (5) and/or a modification in the configuration of the individual tension means (5), **characterized in that** a central belt portion (a) is adjoined in both directions first of all by a first belt portion (b) and then by a second belt portion (c), wherein the belt-width-specific tensile stiffness on the first belt portion (b) is greater than that on the central belt portion (a) and on the second belt portion (c).

8. Conveyor belt (1) according to Claim 7, **characterized in that** the base material (4) is an elastomer, in particular or a rubber-like plastics material.

9. Conveyor belt (1) according to Claim 7 or 8, **characterized in that** the tension means (5) provided are steel wires or steel cables.

10. Conveyor belt (1) according to one of Claims 7 to 9, **characterized in that** all the tension means (5) are of identical design, wherein there is an increase in the belt-width-specific density of tension means (5) in belt portions (b), which have an increased belt-width-specific tensile stiffness.

## Revendications

1. Système de bande transporteuse comprenant une bande transporteuse (1) s'étendant dans une direction longitudinale et une pluralité de postes de rouleaux de support (2) espacés dans la direction longitudinale, au niveau desquels la bande transporteuse (1) est supportée sur des rouleaux de support (3), la bande transporteuse (1) étant formée d'un matériau de base flexible (4) et d'une pluralité de moyens de traction (5) n'étant pas connectés les uns aux autres, s'étendant dans la direction longitudinale et définissant la rigidité en traction de la bande transporteuse (1), et **caractérisé en ce que** dans la section transversale de la bande transporteuse (1) et par rapport à une position de consigne au niveau d'une portion de bande centrale (a) supportée à chaque fois sur un rouleau de support (3) du poste de rouleaux de support (2), la rigidité en traction rapportée à la largeur de la bande est plus faible qu'au niveau des portions de bande (b) s'y raccordant latéralement, qui ne sont pas supportées sur un rouleau de support (3) dans la position de consigne.

2. Système de bande transporteuse selon la revendication 1, **caractérisé en ce que** la densité de moyens de traction (5) au niveau de la portion de bande centrale supportée (a) et/ou la surface en section transversale des moyens de traction individuels (5) est réduite par comparaison aux portions de bande (b) s'y raccordant latéralement.

3. Système de bande transporteuse selon la revendication 1 ou 2, **caractérisé en ce que** les postes de rouleaux de support (2) présentent à chaque fois au moins trois rouleaux de support (3) avec un rouleau de support central (3) en dessous de la bande transporteuse (1) et deux rouleaux de support (3) disposés latéralement par rapport à celui-ci, les portions de bande (a, c) supportées dans la position de consigne sur les rouleaux de support (3) présentant une plus faible rigidité en traction rapportée à la largeur de la bande que les portions de bande (b) non supportées entre le rouleau de support central (3) et l'un des rouleaux de support (3) disposés latéralement.

4. Système de bande transporteuse selon l'une quelconque des revendications 1 à 3, **caractérisé en ce que** la bande transporteuse (1) est formée par un agencement annulaire des rouleaux de support (3) au niveau des postes de rouleaux de support (2) pour former une boucle fermée.

5. Système de bande transporteuse selon la revendication 4, **caractérisé en ce que** les moyens de traction (5) sont disposés dans la bande transporteuse (1) de telle sorte que le centre de gravité de tous les moyens de traction (5) ensemble soit situé approximativement au centre de gravité de la surface en section transversale limitée par les rouleaux de support (3) d'un poste de rouleaux de support (2).

6. Système de bande transporteuse selon l'une quelconque des revendications 1 à 5, **caractérisé en ce qu'**au moins le long d'une longueur partielle du système, les postes de rouleaux de support (2) successifs sont disposés le long d'un trajet polygonal.

7. Bande transporteuse (1) pour un système de bande transporteuse selon l'une quelconque des revendications 1 à 6, constituée d'un matériau de base flexible (4) et de moyens de traction (5) n'étant pas connectés les uns aux autres, s'étendant dans la direction longitudinale de la bande transporteuse (1) et définissant la rigidité en traction de la bande transporteuse (1), dans laquelle, en section transversale de la bande transporteuse (1), par une modification de la densité des moyens de traction (5) rapportée à la largeur de la bande et/ou par une modification de la configuration des moyens de traction individuels (5), sont formées des portions de bande (a, b, c) ayant une rigidité en traction différente rapportée à la largeur de la bande, **caractérisée en ce qu'**à partir d'une portion de bande centrale (a), dans les deux directions, se raccordent d'abord une première portion de bande (b) puis une deuxième portion de bande (c), la rigidité en traction rapportée à la largeur de la bande au niveau de la première portion de bande (b) étant plus grande qu'au niveau de la portion de bande centrale (a) et qu'au niveau de la deuxième portion de bande (c).

8. Bande transporteuse (1) selon la revendication 7, **caractérisée en ce que** le matériau de base (4) est un élastomère, en particulier ou un plastique de type caoutchouc.

9. Bande transporteuse (1) selon la revendication 7 ou 8, **caractérisée en ce que** l'on prévoit en tant que moyens de traction (5), des fils d'acier ou des câbles d'acier.

10. Bande transporteuse (1) selon l'une quelconque des revendications 7 à 9, **caractérisée en ce que** la totalité des moyens de traction (5) sont réalisés de manière identique, la densité de moyens de traction (5) rapportée à la largeur de la bande étant supérieure dans les portions de bande (b) ayant une rigidité en traction plus élevée rapportée à la largeur de la bande.
